# EUROPÄISCHE PATENTSCHRIFT

(11) **EP 3 318 351 B1**
(45) Veröffentlichungstag und Bekanntmachung des Hinweises auf die Patenterteilung: **30.12.2020**
(21) Anmeldenummer: 16020429.3
(22) Anmeldetag: 02.11.2016
(51) Int. Cl.: B22F 3/105, G01N 27/407, G01N 30/88, B23K 26/342

(54) **VERFAHREN ZUR GENERATIVEN FERTIGUNG EINES 3-DIMENSIONALEN BAUTEILS**
METHOD FOR THE GENERATIVE PRODUCTION OF A THREE-DIMENSIONAL COMPONENT
PROCÉDÉ DE FABRICATION ADDITIVE D'UN COMPOSANT TRIDIMENSIONNEL

(43) Veröffentlichungstag der Anmeldung: 09.05.2018
(73) Patentinhaber: Linde GmbH, 82049 Pullach (DE); Airbus Defence and Space GmbH, 82024 Taufkirchen (DE)
(72) Erfinder: FORET, Pierre, 80796 München (DE); BAUER, Dominik, 82110 Germering (DE); HULTSTEIN, Eric, 81927 München (DE)
(74) Vertreter: Gellner, Bernd

(56) Entgegenhaltungen:
- WO-A1-2016/062714
- US-A- 4 983 194
- US-A1- 2009 104 101

## Beschreibung

Die vorliegende Erfindung betrifft ein Verfahren zum generativen Fertigen eines dreidimensionalen Bauteils in einer Prozesskammer, wobei die Schritte "Bereitstellen eines metallischen Ausgangsmaterials in der Prozesskammer" und "Aufschmelzen des Ausgangsmaterials durch Energiezufuhr" mehrfach wiederholt werden, wobei in der Prozesskammer ein Prozessgas bereit gestellt wird und wobei ein Teil des Prozessgases aus der Prozesskammer abgezogen, als Kreislaufgas im Kreislauf geführt und wieder in die Prozesskammer zurückgeführt wird.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle, die Stereolithografie und das Digital Light Processing für flüssige Kunstharze und das Polyjet-Modeling sowie das Fused Deposition Modeling für Kunststoffe und teilweise Kunstharze.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM), als Laser Metal Fusion (LFM) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren: das Werkstück wird Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunstsoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser-basierten Verfahren. Loses Metallpulver, im Pulverbett oder über eine Düse, oder Draht wird dabei punktuell aufgeschmolzen und erstarrt anschließend in der gewünschten Kontur. Die dafür erforderliche Energie wird durch einen Elektronenstrahl eingebracht. Das Verfahren erfolgt meistens in einer Inertgas-gefluteten UnterdruccKammer.

Demgemäß werden bei generativen Fertigungsverfahren ein Pulverbett, eine Pulverzuführung oder eine Drahtzuführung verwendet, wobei diese Ausgangsmaterialien dann mittels Laserstrahl, Elektronenstrahl, Plasma-/Lichtbogen aufgeschmolzen und anschließend verfestigt werden. Weiterhin werden bei den generativen Fertigungsverfahren Inert- oder Aktivgase als Prozessgase verwendet.

Generative Fertigungsververfahren finden häufig in einer Prozesskammer statt, die mit einem Prozessgas gefüllt ist. Üblicherweise wird dabei ein Inertgas verwendet, bei dem die Verunreinigungen strikt kontrolliert werden müssen. Beispielsweise darf der Sauerstoffgehalt einen bestimmten Schwellenwert nicht übersteigen. Ein weiteres Beispiel für Verunreinigungen ist die im Prozessraum vorliegende Feuchtigkeit, die ebenfalls streng kontrolliert werden muss.

Das Prozessgas wird beispielsweise beim Öffnen der Prozesskammer verunreinigt. Beim Entnehmen eines hergestellten Bauteils und der anschließenden Herstellung eines neuen Bauteils, tritt Umgebungsluft in die Prozesskammer ein. Eine andere Quelle für Verunreinigungen ist das Pulver selbst, das Verunreinigungen an der Oberfläche der Partikel absorbiert haben kann, die dann während des Schmelzprozesses frei gesetzt werden und dadurch die Prozessgasatmosphäre kontaminieren.

Aus der WO 2016/062714 A1 offenbart ein Verfahren zum additiven Fertigen in einer Prozesskammer, in der ein Prozessgas bereitgestellt wird, wobei ein Teil des Prozessgases aus der Prozesskammer abgezogen, im Kreislauf geführt und wieder zurück in die Prozesskammer geleitet wird.

Aus der US 4,983,194 ist ein Verfahren zur Gewinnung von Argon und zur Entfernung von Sauerstoff aus Rohargon bekannt.

Aus der US 2009/0104101 A1 ist ein verfahren zur Reinigung von Edelgasen bekannt.

Aufgabe der vorliegenden Erfindung ist es daher ein generatives Fertigungsverfahren bereitzustellen, welches eine bessere Kontrolle der Prozessgasatmosphäre in der Prozesskammer erlaubt.

Insbesondere soll die Erfindung eine bessere Kontrolle des Sauerstoffgehalts und/oder des Taupunkts des Prozessgases ermöglichen.

Alle oder ein Teil dieser Aufgaben werden durch die unabhängigen Ansprüche gelöst. Vorteilhafte Ausgestaltungen sind in den Unteransprüchen angegeben.

Erfindungsgemäß wird ein Verfahren zum generativen Fertigen eines dreidimensionalen Bauteils in einer Prozesskammer vorgeschlagen, wobei die Schritte "Bereitstellen eines metallischen Ausgangsmaterials in der Prozesskammer" und "Aufschmelzen des Ausgangsmaterials durch Energiezufuhr" mehrfach wiederholt werden. Auf diese Weise wird das Bauteil schichtweise hergestellt.

Dabei wird in der Prozesskammer ein Prozessgas bereit gestellt. Ein Teil des Prozessgases wird aus der Prozesskammer abgezogen, als Kreislaufgas im Kreislauf geführt und wieder in die Prozesskammer zurückgeführt.

Erfindungsgemäß wird nun dem Kreislaufgas Wasserstoff zugeführt und das mit Wasserstoff angereicherte Kreislaufgas wird auf eine Temperatur von mehr als 500 °C, mehr als 600 °C oder mehr als 700 °C erhitzt. Wie oben erwähnt ist das Prozessgas häufig mit Sauerstoff, der beispielsweise beim Öffnen der Prozesskammer oder bei der Zuführung des Ausgangsmaterials in die Prozesskammer gelangt, verunreinigt. Bei den genannten Temperaturen reagiert ein wesentlicher Teil des Sauerstoffs mit dem zugeführten bzw. im Kreislaufgas befindlichen Wasserstoff zu Wasser. Der Sauerstoffgehalt (und der Wasserstoffgehalt) des Kreislaufgases können auf diese Weise effektiv gesenkt werden.

Der bei der obigen Reaktion entstehende Wasserdampf stört jedoch ebenfalls den generativen Fertigungsprozess. Daher wird das Kreislaufgas anschließend auf eine Temperatur von weniger als 60 °C, weniger als 40 °C oder weniger als 20 °C abgekühlt. Der im Kreislaufgas befindliche Wasserdampf kondensiert dabei bis zu dem dem Taupunkt entsprechenden Wasserdampfpartialdruck aus. Die Abkühlung des Kreislaufgases erfolgt in Abhängigkeit davon, wie trocken das Kreislaufgas sein soll, das heißt wieviel Restwasserdampf im Kreislaufgas akzeptiert werden kann, ohne dass der Fertigungsprozess negativ beeinflusst wird. Je stärker das Kreislaufgas abgekühlt wird, desto stärker wird dessen Taupunkt erniedrigt und desto geringer ist der Anteil des im Kreislaufgas verbleibenden Wasserdampfes.

In einer Ausführungsform der Erfindung wird das Kreislaufgas auf eine Temperatur von weniger als 0 °C, weniger als -30 °C oder weniger als -50 °C, abgekühlt. Dies kann beispielsweise dadurch erfolgen, dass das Kreislaufgas durch eine Kühlfalle mit flüssigem oder festem Kohlendioxid oder mit flüssigem Stickstoff geleitet wird.

Eine Vorrichtung zum generativen Fertigen eines dreidimensionalen Bauteils, die nicht Teil der Erfindung ist, umfasst eine Prozesskammer mit einer Bauplattform und einer Auftragsvorrichtung zum Aufbringen des Ausgangsmaterials auf die Bauplattform, einen Laser zum Aufschmelzen des Ausgangsmaterials, eine Prozessgaszuführeinrichtung zum Zuführen von Prozessgas in die Prozesskammer, wobei die Prozesskammer einen Auslass und einen Einlass und eine den Auslass und den Einlass verbindende Kreislaufleitung aufweist. Eine Wasserstoffzuführung ist an die Kreislaufleitung angeschlossen, wobei die Wasserstoffzuführung mit einer Wasserstoffquelle verbunden ist. Stromabwärts des Anschlusses der Wasserstoffzuführung ist eine Heizvorrichtung zur Erwärmung des durch die Kreislaufleitung strömenden Prozessgases vorgesehen und stromabwärts der Heizvorrichtung eine Kühlfalle zum Auskondensieren von Wasser.

Die Erfindung ermöglicht einen kontrollierten Fertigungsprozess unter definierten Bedingungen. Umgebungsluft, und damit Sauerstoff sowie Feuchtigkeit, können beispielsweise über Lecks oder mit dem zugeführten Ausgangsmaterial in die Prozesskammer eindringen und das Prozessgas verunreinigen. Sowohl Sauerstoff als auch Feuchtigkeit haben einen negativen Effekt auf die mechanischen Eigenschaften des hergestellten Bauteils. Dazu kommt, dass insbesondere die Menge an in die Prozesskammer eingetragener Feuchtigkeit von den klimatischen Bedingungen am Fertigungsort, zum Beispiel Temperatur und Luftfeuchtigkeit, oder auch von der Art des verwendeten Pulvers oder Ausgangsmaterials abhängt. Dies hat bisher zur Folge, dass mit der selben Vorrichtung hergestellte Bauteile unterschiedliche Eigenschaften aufweisen können. Erfindungsgemäß wird dies durch die definierte Einstellung des Sauerstoffgehalts und der Feuchtigkeit des Prozessgases bzw. des Kreislaufgases vermieden. Es können definierte Fertigungsbedingungen eingestellt und damit Bauteile reproduzierbar hergestellt werden.

Unter einem generativen Fertigen wird im Rahmen der vorliegenden Erfindung das lagenweise bzw. schichtweise Aufbauen eines dreidimensionalen Bauteils unter Verwendung eines Pulverbettes, einer Pulverzuführung oder einer Drahtzuführung, welche als Ausgangsmaterial dienen, und durch Energiezufuhr, beispielsweise mittels Laserstrahl, Elektronenstrahl oder Plasma bzw. Lichtbogen, aufgeschmolzen werden, verstanden. Diesbezüglich wird auf die in der Beschreibungseinleitung genannten generativen Fertigungsverfahren (3D-Drucken bzw. bei der Verfestigung durch chemische Aktivatoren, Aufschmelzen und Erstarren (Laser Engineered Net Shaping (LENS), als Direct Metal Deposition (DMD) oder als Laser Additive Manufacturing (LAM)), lokalen Sintern oder Schmelzen, (Laser-Sintern (SLS)) Metall-Laser-Sintern (DMLS), Metall-Laser-Sintern (IMLS), Electron Beam Melting (EBM)) Bezug genommen.

In einer bevorzugten Ausführungsform der Erfindung wird zunächst der Sauerstoffgehalt des Prozessgases ermittelt und anschließend die Menge des dem Kreislaufgas zugeführten Wasserstoffs in Abhängigkeit von dem ermittelten Sauerstoffgehalt eingestellt. Hierzu kann entweder der Sauerstoffgehalt des Prozessgases in der Prozesskammer oder der Sauerstoffgehalt des im Kreislauf geführten Prozessgases, d. h. des Kreislaufgases, ermittelt werden.

Die Erfindung ermöglicht die Absenkung des Sauerstoffgehalts durch Reaktion des vorhandenen Sauerstoffs mit Wasserstoff zu Wasserdampf und anschließendem Auskondensieren des entstandenen Wasserdampfs. Hierzu wird, wie oben erläutert, dem Kreislaufgas Wasserstoff zugeführt. Wird aber mehr Wasserstoff zugeführt als mit dem im Prozessgas vorhandenen Sauerstoff reagieren kann, so verbleibt Restwasserstoff im Prozessgas. Dieser Restwasserstoff kann sich negativ auf den Fertigungsprozess auswirken und beispielsweise zu Versprödungen des herzustellenden Bauteils führen. Von Vorteil wird daher nicht mehr Wasserstoff zugeführt als für die Umsetzung des im Prozessgas vorhandenen Sauerstoffs notwendig ist. Entsprechend der Reaktion

H2 + 1 /2 O2 → H2O

wird dem Kreislaufgas von Vorteil eine Wasserstoff-Stoffmenge zugeführt, die maximal das Doppelte des ermittelten Sauerstoffgehalts beträgt.

Je nachdem welches Ausgangsmaterial für die generative Fertigung verwendet wird und welche Art Bauteil hergestellt wird, kann im Prozessgas befindlicher Wasserstoff schädlicher sein als im Prozessgas befindlicher Sauerstoff. In diesem Fall ist es von Vorteil dem Kreislaufgas eine Wasserstoff-Stoffmenge zuzuführen, die weniger als das Doppelte des ermittelten Sauerstoffgehalts beträgt, insbesondere weniger als 90%, weniger als 80% oder weniger als 70% des ermittelten Sauerstoffgehalts.

Gemäß der folgenden Offenbarung, die nicht Teil der Erfindung ist, kann der Sauerstoffgehalt des Prozessgases mittels eines Sauerstoffsensors bestimmt werden. Hierzu wird beispielsweise eine sogenannte Lambdasonde eingesetzt. Eine Lambdasonde vergleicht den Sauerstoffgehalt im Prozessgas mit dem bekannten Sauerstoffgehalt eines Referenzgases. Dabei nutzt man die Eigenschaft von bestimmten Keramiken aus, Sauerstoffionen elektrolytisch transportieren zu können. Wird eine Seite der Keramik einem Referenzgas und die andere Seite der Keramik einem Prozessgas ausgesetzt, so entsteht eine Spannung, welche ein Maß für den unterschiedlichen Sauerstoffpartialdruck der beiden Gase ist. Bei bekanntem Referenzgas lässt sich daraus der Sauerstoffgehalt des Prozessgases ermitteln.

Gemäß einem nicht erfindungsgemäßen Beispiel, tritt die elektrolytische Leitfähigkeit vieler Keramiken jedoch nur bei erhöhten Temperaturen von beispielsweise 700 °C auf. Die Lambdasonde und das Prozessgas werden daher für die Messung des Sauerstoffgehalts entsprechend aufgeheizt. Bei 700°C reagiert der Sauerstoff des Prozessgases mit etwaigem in dem Prozessgas befindlichen Wasserstoff zu Wasser. Das heißt, bei der Messung des Sauerstoffgehalts reagiert bereits ein Teil des Sauerstoffs zu Wasser und es muss nur noch eine der verbleibenden Sauerstoffmenge entsprechende Wasserstoffmenge zugeführt werden. Diese verbleibende Sauerstoffmenge entspricht aber genau derjenigen Menge, welche von der Lambdasonde gemessen wird.

Es kann vorkommen, dass das Prozessgas bereits eine nicht zu vernachlässigende Menge an Wasserstoff enthält. Wenn in diesem Fall die dem Kreislaufgas zuzuführende Menge an Sauerstoff nur in Abhängigkeit vom Sauerstoffgehalt bestimmt wird, besteht die Gefahr, dass zu viel Wasserstoff zugeführt wird und nicht der gesamte Wasserstoff zu Wasserdampf umgesetzt werden kann. Es ist daher vorteilhaft, den Wasserstoffgehalt und den Sauerstoffgehalt des Kreislaufgases zu ermitteln und anschließend dem Kreislaufgas maximal soviel Wasserstoff zuzuführen, dass der Stoffmengenanteil an Wasserstoff im Kreislaufgas maximal das Doppelte des Stoffmengenanteils an Sauerstoff im Kreislaufgas beträgt. Auf diese Weise wird sichergestellt, dass nach der Erhitzung des Prozessgases und der dabei ablaufenden Reaktion von Wasserstoff und Sauerstoff zu Wasser kein Restwasserstoff im Prozessgas verbleibt.

Von Vorteil wird dem Kreislaufgas nicht nur Wasserstoff, sondern auch ein Inertgas zugeführt. Durch die zusätzliche Zugabe des Inertgases wird die Durchmischung des Kreislaufgases mit dem Wasserstoff gefördert.

In einer anderen Ausführungsform der Erfindung wird der Wasserstoff nicht als Reingas, sondern als Gemisch mit einem Inertgas dem Kreislaufgas zugeführt. Die Zuführung eines Wasserstoff enthaltenden Gasgemischs hat den Vorteil, dass die Wasserstoffmenge besser geregelt werden kann, insbesondere wenn nur geringe Mengen Wasserstoff zugeführt werden müssen. Beispielsweise wird hierzu ein Gasgemisch mit 0,1Vol-% oder 1Vol-% Wasserstoff in Argon oder in Stickstoff benutzt.

Die Bestimmung des Sauerstoffgehalts des Prozessgases kann direkt in der Prozesskammer oder außerhalb der Prozesskammer, insbesondere im Kreislaufgas, vorgesehen sein. Ebenso kann die Bestimmung des Wasserstoffgehalts des Prozessgases direkt in der Prozesskammer oder außerhalb der Prozesskammer, insbesondere im Kreislaufgas, vorgesehen sein. Es ist ebenso möglich, für die Bestimmung des Wasserstoffgehalts und die Bestimmung des Sauerstoffgehalts unterschiedliche Teile oder Proben des Prozessgases zu verwenden.

Bei der Erwärmung des mit Wasserstoff angereicherten Kreislaufgases reagieren Wasserstoff und Sauerstoff zu Wasserdampf. Dieser Wasserdampf wird anschließend durch Abkühlung des Kreislaufgases auskondensiert. Vorzugsweise wird das bei der Kondensation gebildete Wasser aus dem Kreislaufgas entfernt. Dies kann beispielsweise mittels eines Abscheiders, zum Beispiel eines Tropfenabscheiders, erfolgen.

Der Grad der Umsetzung von Sauerstoff und Wasserstoff zu Wasserdampf ist temperaturabhängig. Bei niedrigen Temperaturen findet diese Reaktion langsamer statt und das Reaktionsgleichgewicht liegt stärker auf der Seite der Edukte Wasserstoff und Sauerstoff als bei hohen Temperaturen, bei denen das Reaktionsgleichgewicht mehr bei dem Produkt Wasser liegt. Es ist daher günstig, die Erhitzung des Kreislaufgases in Abhängigkeit vom Sauerstoffgehalt des Prozessgases zu regeln. Die Regelung kann abhängig vom ermittelten Sauerstoffgehalt vor der Erhitzung des Kreislaufgases und/oder abhängig von dem gewünschten Sauerstoffgehalt nach der Erhitzung des Kreislaufgases und der Kondensation des Wasserdampfs erfolgen. Wenn beispielsweise eine sehr niedrige Restkonzentration an Sauerstoff im Prozessgas erwünscht ist, ist es günstig, das Kreislaufgas stärker zu erhitzen und so die Umsetzungsreaktion zu Wasser zu forcieren, als wenn die Konzentration des im Prozessgas akzeptablen Sauerstoffs weniger kritisch ist, das heißt auch höhere Werte annehmen darf. Beispielsweise wird das Kreislaufgas auf eine Temperatur von mehr als 500°C, mehr als 600°C oder eine Temperatur zwischen 550°C und 750°C, vorzugsweise zwischen 600 °C und 700°C, erhitzt.

Entsprechendes gilt für die Abkühlung des Kreislaufgases. Auch der Grad der Abkühlung, das heißt die Temperatur, auf die das Kreislaufgas abgekühlt wird, kann in Abhängigkeit vom ermittelten und/oder gewünschten Sauerstoffgehalt des Prozessgases geregelt werden.

In einer alternativen oder ergänzenden Ausführungsform der Erfindung werden die Erhitzung des Kreislaufgases und/oder die Abkühlung des Kreislaufgases in Abhängigkeit vom Taupunkt des Kreislaufgases geregelt. Das oben zur Regelung in Abhängigkeit vom Sauerstoffgehalt Gesagte gilt entsprechend. Insbesondere wird das Prozessgas umso stärker abgekühlt, je niedriger der Wasserdampfgehalt und die Feuchtigkeit des Prozessgases sein sollen. Selbstverständlich ist auch eine Regelung günstig, bei der Erhitzung und/oder Abkühlung in Abhängigkeit vom Sauerstoffgehalt und dem Taupunkt des Prozessgases eingestellt oder geregelt werden.

In einer weiteren Ausführungsform der Erfindung das Kreislaufgas nach der Auskondensation des Wasserdampfs vollständig oder nur teilweise in die Prozesskammer zurückgeführt. Bei einem zu hohen Sauerstoffgehalt, Wasserstoffgehalt und/oder Wasserdampfgehalt des Prozessgases wird beispielsweise ein Teil des Kreislaufgases verworfen und durch Inertgas, welches in die Prozesskammer eingeleitet wird, ersetzt.

Zusätzlich können auch noch weitere Parameter des Prozessgases bzw. des Kreislaufgases bestimmt und gegebenenfalls mit einem Sollwert verglichen werden. In Abhängigkeit von dem Ergebnis des Vergleichs des ermittelten Wertes mit dem Sollwert können Erhitzung und/oder Abkühlung und/oder die Zuspeisung eines Inertgases oder eines Aktivgases in die Prozesskammer geregelt werden.

Vorzugsweise werden einer oder mehrere der folgenden Parameter des des Kreislaufgases bestimmt: Wasserstoffgehalt, Sauerstoffgehalt, Wasserdampfgehalt, Taupunkt, Kohlenstoffgehalt oder Temperatur. Alternativ oder ergänzend werden einer oder mehrere der folgenden Parameter des in der Prozesskammer befindlichen Prozessgases bestimmt: Wasserstoffgehalt, Sauerstoffgehalt, Wasserdampfgehalt, Taupunkt, Kohlenstoffgehalt oder Temperatur.

Der bei einer Kreislaufführung zurückgeführte Gasstrom oder neu hinzugegebenes Inertgas werden der Prozesskammer über einen oder mehrere Einlässe zugeführt, wobei die Einlässe vorzugsweise in einem unteren Bereich der Prozesskammer angeordnet sind. Auf diese Weise bleiben die Prozessparameter stabil und es sind homogene metallurgische Effekte während der Herstellung erzielbar. Insbesondere kann vorgesehen sein, dass zumindest ein Teil des Prozessgases durch das Ausgangsmaterial, das als Pulverbett vorliegt, hindurch zugeführt wird. Durch die unmittelbare Nähe des Bereichs, in dem das Prozessgas in die Prozesskammer eintritt, zum Pulverbett und zur Bearbeitungsstelle wird eine konstante Atmosphäre beim generativen Fertigen des Bauteils an der obersten Schicht des Bauteils erzeugt.

Das erfindungsgemäße Verfahren kann vorzugsweise ein Laser-Schmelz-Verfahren betreffen. Das Ausgangsmaterial wird dann mittels eines Laserstrahls lokal aufgeschmolzen.

Als Prozessgas ist vorzugsweise ein Inertgas, das bei gleicher Temperatur eine höhere Dichte als Luft aufweist, wie z.B. Argon, vorgesehen. Das Inertgas kann vorzugsweise eine Temperatur aufweisen, die niedriger als die Temperatur der in der Prozesskammer zu Beginn vorliegenden Luft ist. In beiden Fällen sammelt sich das Prozessgas im unteren Bereich der Prozesskammer, in dem sich auch die Bearbeitungsstelle befindet. Das schwerere gasförmige Argon drückt beispielsweise die leichtere Luft in den oberen Bereich der Prozesskammer, in dem zum Beispiel ein Auslass zum Abführen der Luft vorgesehen ist.

Gemäß einem nicht erfindungsgemäßen Beispiel, ist es auch möglich, dem Prozessgas reaktive Komponenten, insbesondere reaktive Gase wie zum Beispiel CO oder CO2, oder gut wärmeleitende Gase, wie zum Beispiel He, zuzugeben.

Gemäß einem weiteren nicht erfindungsgemäßen Beispiel, kann das Prozessgas in der Prozesskammer mittels zumindest einer Ventilatoreinrichtung verwirbelt werden. Auf diese Weise wird eine homogene Gaszusammensetzung über das gesamte Volumen der Prozesskammer bereitgestellt. Die entnommene Probe stellt somit eine gute Repräsentation der Zusammensetzung des Prozessgases in der Prozesskammer dar.

Auf die erfindungsgemäße Weise wird der Sauerstoffgehalt des Prozessgases abgesenkt. In einer Ausführungsform der Erfindung wird dem Kreislaufgas und/oder der Prozesskammer ein sauerstofffreies Gas zugeführt, wenn der Wert für den Sauerstoffgehalt nach der Reaktion zu Wasser immer noch größer als ein vorgegebener Vergleichswert ist. Auf diese Weise kann der Sauerstoffgehalt des Prozessgases in der Prozesskammer unterhalb eines vorgegebenen Maximalwertes gehalten werden.

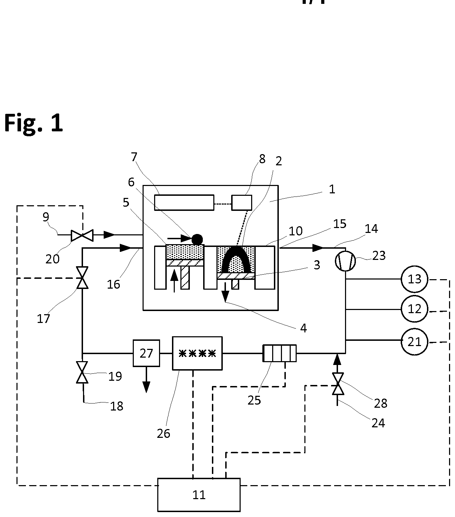

Die Erfindung sowie weitere Einzelheiten der Erfindung werden im Folgenden anhand von dem in der Zeichnung schematisch dargestellten Ausführungsbeispiel näher erläutert. Hierbei zeigt
- Figur 1: eine erfindungsgemäße Vorrichtung zum dreidimensionalen Fertigen.

Figur 1 zeigt eine schematische Darstellung einer Vorrichtung zur Durchführung des erfindungsgemäßen Verfahrens.

Im Folgenden wird eine Vorrichtung zum generativen Fertigen eines dreidimensionalen Bauteils beschrieben. Wie bereits vorstehend erwähnt, ist das erfindungsgemäße Verfahren aber nicht auf die dargestellte Vorrichtung zum generativen Fertigen von dreidimensionalen Bauteilen beschränkt.

Die Vorrichtung ist eine Laser-Schmelz-Vorrichtung. Die Laser-Schmelz-Vorrichtung umfasst eine Prozesskammer 1, die als Bauraum für das dreidimensionale Bauteil 2 dient.

In der Prozesskammer 1 befindet sich eine Bauplattform 3 zur Aufnahme des zu fertigenden Bauteils 2 angeordnet. Die Bauplattform 3 weist eine Höhenverstelleinrichtung 4 auf, mittels der die Bauplattform 3 in vertikaler Richtung einstellbar ist.

Weiterhin umfasst die Vorrichtung 1 einen Vorratsbehälter 5. Der Vorratsbehälter 5 ist zur Aufnahme eines verfestigbaren pulverförmigen Ausgangsmaterials ausgebildet.

Weiterhin ist eine Auftrageinrichtung 6 zum Aufbringen des Ausgangsmaterials auf die Bauplattform 3 vorgesehen. Eine solche Auftrageinrichtung 6 ist in horizontaler Richtung parallel zur Arbeitsebene 10 beweglich.

Zudem ist ein Laser 7 zum Erzeugen eines Laserstrahls vorgesehen. Ein von dem Laser 7 erzeugter Laserstrahl wird über eine Umlenkeinrichtung 8 umgelenkt und durch eine Fokussiereinrichtung (nicht dargestellt) auf einen vorbestimmten Punkt unmittelbar unterhalb oder in der Arbeitsebene 10 fokussiert. Mittels der Umlenkeinrichtung 8 kann der Verlauf des Laserstrahls derart verändert werden, dass er die dem Querschnitt des herzustellenden Objekts 2 entsprechenden Stellen der aufgetragenen Schicht aufschmilzt.

Zudem ist eine Prozessgaszuführeinrichtung 9 vorgesehen, mittels der die Prozesskammer 1 mit einem Prozessgas beaufschlagbar ist.

Die Prozessgaszuführeinrichtung 9 weist einen oder mehrere Vorratsbehälter für das Prozessgas oder einzelne Bestandteile des Prozessgases auf, wobei der Prozessgasvorratsbehälter (nicht dargestellt) über einen bzw. mehrere Leitungsabschnitte mit in die Prozesskammer mündenden Einlässen (nicht dargestellt) verbunden ist. Die Einlässe, z.B. eine oder mehrere Düsen, zum Zuführen von Prozessgas sind in einem unteren Bereich der Prozesskammer 1 angeordnet. Die zugeführte Gasmenge kann mittels eines Regelventils 20 eingestellt werden. Vorzugsweise ist zumindest eine Düse der Prozessgaszuführeinrichtung im Bereich des Bodens der Prozesskammer 1 oder auf einem Fünftel, einem Viertel, der Hälfte, zwei Drittel oder drei Viertel der Höhe zwischen dem Boden der Prozesskammer 1 und der Arbeitsebene 10 oder in etwa auf Höhe der Arbeitsebene 10 angeordnet.

Als Prozessgas ist vorzugsweise ein Inertgas, wie z.B. Argon, vorgesehen, das bei gleicher Temperatur eine höhere Dichte als Luft aufweist.

Ebenfalls in einem unteren Bereich der Prozesskammer ist eine Ventilatoreinrichtung (nicht dargestellt) angeordnet. Es können auch mehrere Ventilatoreinrichtungen vorgesehen sein.

Weiter ist eine Kreislaufführung 14 eines Teils des Prozessgases vorgesehen. Ein Teil des Prozessgases kann über einen Auslass 15 aus der Prozesskammer 1 abgezogen, durch die Kreislaufleitung 14 geführt und über den Einlass 16 wieder in die Prozesskammer 1 zurückgeführt werden. Die Kreislaufführung des Prozessgases erfolgt beispielsweise mittels eines Gebläses oder eines Verdichters 23. In der Kreislaufleitung 14 ist ferner ein Regelventil 17 vorgesehen, mittels dessen die in die Prozesskammer 1 zurückgeführte Gasmenge geregelt werden kann. Außerdem ist eine Leitung 18 vorgesehen, welche von der Kreislaufleitung 14 abzweigt und es erlaubt, das durch die Kreislaufleitung 14 geführte Prozessgas abzuziehen. Die Leitung 18 ist ebenfalls mit einem Regelventil 19 versehen.

Weiterhin umfasst die Vorrichtung eine Steuereinrichtung 11 zum Steuern des Regelventils 20 der Prozessgaszuführeinrichtung 9 und der Regelventile 17 und 19. Die Steuereinrichtung 11 kann eine oder vorzugsweise zwei Regeleinrichtungen (nicht dargestellt) mit einem geschlossenen Regelkreis umfassen. Die Regeleinrichtungen können auch einen P-Regler, einen I-Regler, einen D-Regler und Kombinationen daraus, wie z.B. einen PID-Regler umfassen.

Außerdem sind ein Messensor 12 zur Bestimmung des Wasserstoffgehalts des durch die Kreislaufleitung 14 geführten Prozessgases und eine Lambdasonde 13 zur Bestimmung des Sauerstoffgehalts des durch die Kreislaufleitung 14 geführten Prozessgases vorgesehen. Ein zusätzlicher Sensor 21 dient zur Bestimmung des Wasserdampfgehalts oder des Taupunkts des im Kreislauf geführten Prozessgases. Der Messsensor 12, die Lambdasonde 13 und der Sensor 21 sind an die Steuereinrichtung 11 angeschlossen.

In die Kreislaufleitung 14 mündet eine Wasserstoffzuführung 24, über die ein Gasgemisch aus Inertgas und Wasserstoff in die Kreislaufleitung 14 geleitet werden kann. Die Wasserstoffzuführung 24 ist mit einem Regelventil 28 versehen, über welches die eingeleitete Gasmenge eingestellt werden kann. Das Regelventil 28 ist ebenfalls an die Steuereinrichtung 11 angeschlossen.

Stromabwärts der Einmündung der Wasserstoffzuführung 24 ist eine Heizvorrichtung 25 zur Erhitzung des Kreislaufgases vorgesehen. Weiter stromabwärts befindet sich schließlich eine Kühlfalle 26 zur Abkühlung des Kreislaufgases. Sowohl die Heizvorrichtung 25 als auch die Kühlfalle 26 sind an die Steuereinrichtung 11 angeschlossen und können von der Steuereinrichtung 11 angesteuert werden.

Im Folgenden wird das erfindungsgemäße Verfahren anhand eines Ausführungsbeispiels beschrieben.

Argon wird als Prozessgas in einem unteren Bereich der Prozesskammer 1 zugeführt. Dadurch, dass die Prozessgaszuführeinrichtung 9 das Prozessgas auf Höhe der Arbeitsebene 10 oder darunter zugeführt wird, füllt sich die Prozesskammer 1 von unten nach oben mit dem Prozessgas.

Auf diese Weise drückt das schwerere gasförmige Argon die leichtere Luft in den oberen Bereich der Prozesskammer 1, in dem ein (nicht dargestellter) Auslass zum Abführen der Luft vorgesehen ist.

Das in der Prozesskammer 1 befindliche Prozessgas kann gegebenenfalls mittels einer Ventilatoreinrichtung in der Prozesskammer 1 verwirbelt werden. Durch die Verwirbelung werden Verunreinigungen aus den Toträumen der Prozesskammer entfernt. Zudem wird eine homogene Gaszusammensetzung über das gesamte Volumen der Prozesskammer bereitgestellt. Zusätzlich kann der Prozesskammer 1 sauberes Prozessgas über die Prozessgaszuführeinrichtung 9 zugeführt werden.

Ein metallisches Ausgangsmaterial wird auf der Bauplattform 3 in Form eines Pulverbetts mittels der Auftrageinrichtung 6 aufgebracht bzw. bereitgestellt. Alternativ kann das metallische Ausgangsmaterial auch mittels einer Pulverzuführung oder einer Drahtzuführung zugeführt werden.

Anschließend wird das Ausgangsmaterial mittels des Lasers 7 aufgeschmolzen. Die beiden Schritte "Bereitstellen von Ausgangsmaterial auf der Bauplattform 3" und "Aufschmelzen des Ausgangsmaterials" werden mehrfach wiederholt, wodurch das Bauteil schichtweise aufgebaut wird.

Es hat sich herausgestellt, dass durch die beim Aufschmelzen des Ausgangsmaterials mit dem Laser 7 zugeführte Energie lokal in dem Prozessgas befindliches Wasser bzw. Wasserdampf in Wasserstoff und Sauerstoff zerlegt werden.

Der Sauerstoffgehalt des Prozessgases sollte aber während des Fertigungsprozesses unterhalb eines vorgegebenen Maximalwertes bleiben, um unerwünschten Oxidationen vorzubeugen. Erfindungsgemäß wird daher der Sauerstoffgehalt des Prozessgases überwacht. Hierzu wird eine Probe des durch die Kreislaufleitung 14 geführten Prozessgases der Lambdasonde 13 zugeführt und mittels der Lambdasonde 13 wird der Sauerstoffgehalt der Probe bestimmt. Der so ermittelte Wert für den Sauerstoffgehalt wird der Steuereinrichtung 11 übermittelt.

Zusätzlich zu der Messung des Sauerstoffgehalts wird auch der Wasserstoffgehalt des Prozessgases bzw. des im Kreislauf geführten Prozessgases bestimmt. Hierzu wird dem Prozessgas eine zweite Probe entnommen und mittels eines Messsensors 12 wird deren Wasserstoffgehalt bestimmt.

Die zweite Probe kann stromaufwärts oder stromabwärts der Stelle entnommen werden, an der die Probe für die Bestimmung des Sauerstoffgehalts entnommen wird. Es ist auch möglich, dieselbe Probe für die Bestimmung des Sauerstoffgehalts und die Bestimmung des Wasserstoffgehalts heranzuziehen.

Der vom Messsensor 12 ermittelte Wert für den Wasserstoffgehalt wird ebenfalls der Steuereinrichtung 11 zugeführt. In der Steuereinrichtung 11 wird dann ermittelt, welche zusätzliche Stoffmenge Wasserstoff dem Kreislaufgas 14 zugeführt werden müsste, um die richtige Stöchiometrie für die Umsetzung von Wasserstoff und Sauerstoff zu Wasser erreichen. Die Steuereinrichtung 11 regelt das Regelventil 28 so, dass über die Wasserstoffzuführung 24 maximal soviel Wasserstoff zugeführt wird, dass das stöchiometrische Gleichgewicht erreicht wird. Vorzugsweise beträgt die über die Wasserstoffzuführung 24 zugeführte Stoffmenge an Wasserstoff zwischen 50% und 95% oder zwischen 60 % und 90% oder zwischen 70% und 90% der zuvor als erforderlich ermittelten zusätzlichen Stoffmenge an Wasserstoff.

Das mit Wasserstoff angereicherte Kreislaufgas wird dann der Heizvorrichtung 25 zugeführt und auf eine Temperatur von mehr als 650°C erhitzt. In diesem Temperaturbereich reagieren Wasserstoff und Sauerstoff nahezu vollständig zu Wasserdampf. Das die Heizvorrichtung 25 verlassende Kreislaufgas 14 ist daher im Wesentlichen frei von Sauerstoff und Wasserstoff, enthält aber den bei der Umsetzungsreaktion entstandenen Wasserdampf.

Daher wird das Kreislaufgas 14 in die Kühlfalle 26 geleitet und dort so stark abgekühlt, dass der in dem Kreislaufgas befindliche Wasserdampf auskondensiert. Von Vorteil wird das Kreislaufgas 14 dabei auf eine Temperatur von weniger als 60°C, weniger als 40°C oder weniger als 20°C abgekühlt. Das auskondensierende Wasser wird dann vom Kreislaufgas 14 getrennt und aus dem Kreislauf entfernt.

Weiterhin können alle oder einzelne der Parameter Sauerstoffgehalt, Wasserstoffgehalt, Wasserdampfgehalt und auch andere Parameter, wie zum Beispiel die Temperatur, Kohlenstoffgehalt, usw., in der Kreislaufleitung 14, entweder stromabwärts oder stromaufwärts der Heizvorrichtung 25 und der Kühlfalle 26, oder auch direkt in der Prozesskammer 1 bestimmt werden. Der oder die gemessenen Werte werden von Vorteil auch der Steuereinrichtung 11 zugeführt und zur Regelung der Wasserstoffzuführung 24, der Heizvorrichtung 25, der Kühlfalle 26, der Prozessgaszuführeinrichtung 9, des Regelventils 17 und/oder des Regelventils 19 genutzt.

### Bezuaszeichenliste:

- 1: Prozesskammer
- 2: Bauteil
- 3: Bauplattform
- 4: Höhenverstelleinrichtung
- 5: Vorratsbehälter
- 6: Auftrageinrichtung
- 7: Laser
- 8: Umlenkeinrichtung
- 9: Prozessgaszuführeinrichtung
- 10: Arbeitsebene
- 11: Steuereinrichtung
- 12: Messsensor
- 13: Lambdasonde
- 14: Kreislaufleitung
- 15: Auslass
- 16: Einlass
- 17: Regelventil
- 18: Leitung
- 19: Regelventil
- 20: Regelventil
- 21: Wasserdampfmessung
- 22: Sensor
- 23: Gebläse

## Patentansprüche

1. Verfahren zum generativen Fertigen eines dreidimensionalen Bauteils in einer Prozesskammer, wobei die Schritte
- Bereitstellen eines metallischen Ausgangsmaterials in der Prozesskammer
- Aufschmelzen des Ausgangsmaterials durch Energiezufuhr,
mehrfach wiederholt werden,
wobei in der Prozesskammer ein Prozessgas bereit gestellt wird und wobei ein Teil des Prozessgases aus der Prozesskammer abgezogen, als Kreislaufgas im Kreislauf geführt und wieder in die Prozesskammer zurückgeführt wird,
**dadurch gekennzeichnet,**
**dass** dem Kreislaufgas Wasserstoff zugeführt wird,
**dass** das Kreislaufgas anschließend auf eine Temperatur von mehr als 500 °C, mehr als 600 °C oder mehr als 700 °C erhitzt wird und
**dass** das Kreislaufgas dann auf eine Temperatur von weniger als 60 °C, weniger als 40 °C oder weniger als 20 °C, abgekühlt wird.

2. Verfahren nach Anspruch 1, **dadurch gekennzeichnet, dass** das Kreislaufgas dann auf eine Temperatur von weniger als 0 °C, weniger als -30 °C oder weniger als -50 °C, abgekühlt wird.

3. Verfahren nach Anspruch 1 oder 2, **dadurch gekennzeichnet, dass** der Sauerstoffgehalt des Prozessgases bzw. des Kreislaufgases ermittelt wird und dass die Menge des dem Kreislaufgas zugeführten Wasserstoffs in Abhängigkeit von dem ermittelten Sauerstoffgehalt bestimmt wird.

4. Verfahren nach Anspruch 3, **dadurch gekennzeichnet, dass** die dem Kreislaufgas zugeführte Wasserstoff-Stoffmenge maximal das Doppelte des ermittelten Sauerstoffgehalts beträgt.

5. Verfahren nach Anspruch 4, **dadurch gekennzeichnet, dass** die dem Kreislaufgas zugeführte Wasserstoff-Stoffmenge weniger als das Doppelte des ermittelten Sauerstoffgehalts beträgt, insbesondere weniger als 90%, weniger als 80% oder weniger als 70% des ermittelten Sauerstoffgehalts beträgt.

6. Verfahren nach Anspruch 4, **dadurch gekennzeichnet, dass** der Wasserstoffgehalt und der Sauerstoffgehalt des Kreislaufgases ermittelt werden und anschließend dem Kreislaufgas maximal soviel Wasserstoff zugeführt wird, dass der Stoffmengenanteil an Wasserstoff im Kreislaufgas maximal das Doppelte des Stoffmengenanteils an Sauerstoff im Kreislaufgas beträgt.

7. Verfahren nach einem der vorhergehenden Ansprüche, **dadurch gekennzeichnet, dass** der Wasserstoff dem Kreislaufgas zusammen mit einem Inertgas zugeführt wird.

8. Verfahren nach einem der vorhergehenden Ansprüche, **dadurch gekennzeichnet, dass** das bei der Abkühlung des Kreislaufgases kondensierende Wasser aus dem Kreislaufgas entfernt wird.

9. Verfahren nach einem der vorhergehenden Ansprüche, **dadurch gekennzeichnet, dass** die Erhitzung des Kreislaufgases und/oder die Abkühlung des Kreislaufgases in Abhängigkeit vom Sauerstoffgehalt des Prozessgases geregelt werden.

10. Verfahren nach einem der vorhergehenden Ansprüche, **dadurch gekennzeichnet, dass** die Erhitzung des Kreislaufgases und/oder die Abkühlung des Kreislaufgases in Abhängigkeit vom Taupunkt des Kreislaufgases geregelt werden.

## Claims

1. Method for the generative production of a three-dimensional component in a process chamber, wherein the steps of
- provision of a metallic starting material in the process chamber,
- melting of the starting material by supplying energy,
are repeated several times,
wherein a process gas is provided in the process chamber and wherein a portion of the process gas is withdrawn from the process chamber, circulated as a circulating gas, and recycled back into the process chamber,
**characterized in that**
hydrogen is supplied to the circulating gas,
the circulating gas is subsequently heated to a temperature of more than 500 °C, more than 600 °C, or more than 700 °C, and
the circulating gas is then cooled to a temperature of less than 60 °C, less than 40 °C, or less than 20 °C.

2. Method according to claim 1, **characterized in that** the circulating gas is then cooled to a temperature of less than 0 °C, less than -30 °C, or less than - 50 °C.

3. Method according to claim 1 or 2, **characterized in that** the oxygen content of the process gas or of the circulating gas is calculated, and that the quantity of hydrogen supplied to the circulating gas is determined as a function of the calculated oxygen content.

4. Method according to claim 3, **characterized in that** the quantity of hydrogen supplied to the circulating gas amounts to at most twice the calculated oxygen content.

5. Method according to claim 4, **characterized in that** the quantity of hydrogen supplied to the circulating gas is less than twice the calculated oxygen content - in particular, less than 90%, less than 80%, or less than 70% of the calculated oxygen content.

6. Method according to claim 4, **characterized in that** the hydrogen content and the oxygen content of the circulating gas are calculated, and, subsequently, at most enough hydrogen is supplied to the circulating gas that the substance amount fraction of hydrogen in the circulating gas amounts to at most twice the substance amount fraction of oxygen in the circulating gas.

7. Method according to one of the preceding claims, **characterized in that** the hydrogen is supplied to the circulating gas together with an inert gas.

8. Method according to one of the preceding claims, **characterized in that** the water condensing during the cooling of the circulating gas is removed from the circulating gas.

9. Method according to one of the preceding claims, **characterized in that** the heating of the circulating gas and/or the cooling of the circulating gas are regulated as a function of the oxygen content of the process gas.

10. Method according to one of the preceding claims, **characterized in that** the heating of the circulating gas and/or the cooling of the circulating gas are regulated as a function of the dew point of the circulating gas.

## Revendications

1. Procédé de fabrication additive d'un composant tridimensionnel dans une chambre de traitement, dans lequel les étapes de
- mise à disposition d'un matériau de départ métallique dans la chambre de traitement
- fusion du matériau de départ par apport d'énergie,
sont répétées plusieurs fois,
un gaz de traitement étant mis à disposition dans la chambre de traitement et une partie du gaz de traitement étant soutirée de la chambre de traitement, guidée en circulation en tant que gaz circulant et de nouveau renvoyé dans la chambre de traitement,
**caractérisé en ce que**
le gaz circulant est additionné d'hydrogène,
le gaz circulant est ensuite chauffé à une température supérieure à 500 °C, supérieure à 600 °C ou supérieure à 700 °C et
le gaz circulant est ensuite refroidi à une température inférieure à 60 °C, inférieure à 40 °C ou inférieure à 20 °C.

2. Procédé selon la revendication 1, **caractérisé en ce que** le gaz circulant est ensuite refroidi à une température inférieure à 0 °C, inférieure à -30 °C ou inférieure à -50 °C.

3. Procédé selon la revendication 1 ou 2, **caractérisé en ce que** la teneur en oxygène du gaz de traitement ou du gaz circulant est déterminée et **en ce que** la quantité d'hydrogène additionnée au gaz circulant est déterminée en fonction de la teneur en oxygène déterminée.

4. Procédé selon la revendication 3, **caractérisé en ce que** la quantité de matière d'hydrogène ajoutée au gaz circulant représente au maximum le double de la teneur en oxygène déterminée.

5. Procédé selon la revendication 4, **caractérisé en ce que** la quantité de matière d'hydrogène additionnée au gaz circulant représente moins du double de la teneur en oxygène déterminée, en particulier moins de 90 %, moins de 80 % ou moins de 70 % de la teneur en oxygène déterminée.

6. Procédé selon la revendication 4, **caractérisé en ce que** la teneur en hydrogène et la teneur en oxygène du gaz circulant sont déterminées et ensuite de l'hydrogène est additionné au gaz circulant en une quantité maximale telle que la proportion de quantité de matière d'hydrogène dans le gaz circulant représente au maximum le double de la proportion de quantité de matière d'oxygène dans le gaz circulant.

7. Procédé selon l'une quelconque des revendications précédentes, **caractérisé en ce que** l'hydrogène est additionné conjointement avec un gaz inerte au gaz circulant.

8. Procédé selon l'une quelconque des revendications précédentes, **caractérisé en ce que** l'eau qui condense lors du refroidissement du gaz circulant est éliminée du gaz circulant.

9. Procédé selon l'une quelconque des revendications précédentes, **caractérisé en ce que** le chauffage du gaz circulant et/ou le refroidissement du gaz circulant est/sont régulé(s) en fonction de la teneur en oxygène du gaz de traitement.

10. Procédé selon l'une quelconque des revendications précédentes, **caractérisé en ce que** le chauffage du gaz circulant et/ou le refroidissement du gaz circulant est/sont régulé(s) en fonction du point de rosée du gaz circulant.
